Europäisches Patentamt

European Patent Office

Office européen des brevets

(11) Publication number: **0 526 611 B1**

# EUROPEAN PATENT SPECIFICATION

(45) Date of publication of patent specification: **25.01.95**   (51) Int. Cl.⁶: **B01J 35/04**, F01N 3/28

(21) Application number: **92905382.5**

(22) Date of filing: **21.02.92**

(86) International application number:
**PCT/FI92/00047**

(87) International publication number:
**WO 92/14549 (03.09.92 92/23)**

(54) **MECHANICALLY STRONG CATALYST SAVING NOBEL METALS AND A METHOD FOR ITS PREPARATION.**

(30) Priority: **21.02.91 FI 910834**

(43) Date of publication of application:
**10.02.93 Bulletin 93/06**

(45) Publication of the grant of the patent:
**25.01.95 Bulletin 95/04**

(84) Designated Contracting States:
**DE FR GB IT**

(56) References cited:
**EP-A- 0 241 269
SE-B- 408 137
US-A- 3 692 497
US-A- 4 987 112**

(73) Proprietor: **KEMIRA OY
PL 44
SF-02271 Espoo (FI)**

(72) Inventor: **LYLYKANGAS, Reijo
Jussinkuja 4
SF-41330 Vihtavuori (FI)**
Inventor: **LAPPI, Pekka
Saikkosentie 13
SF-40250 Jyväskylä (FI)**

(74) Representative: **Liska, Horst, Dr.-Ing. et al
Patentanwälte
H. Weickmann,K. Fincke,F.A. Weickmann,
B. Huber,H. Liska,J. Prechtel,B. Böhm
Postfach 86 08 20
D-81635 München (DE)**

EP 0 526 611 B1

**Description**

The present invention relates to a mechanically strong catalytic honeycomb, saving noble metals, for purifying combustion engine exhaust gases and to a method for its preparation, the flow channels in the honeycomb being substantially smaller in diameter and having substantially more openings per cross-sectional area than have prior-art catalytic units.

The suitability of catalysts for a specific purpose may be described by a number of different criteria. These include activity, selectivity and stability. Also physical properties, such as surface area, pore volume and pore distribution determine the functioning of a catalyst. The counterpressure generated when the exhaust gases flow through the honeycomb is a significant physical factor. Metal catalytic honeycombs for automobiles are, as a rule, formed by using uncoated corrugated and flat foil bands and by making a helical honeycomb (GB patent 2069364). Joints are welded at the ends in order to prevent the foil bands from moving in relation to each other. In this case, the honeycomb can be coated with a support material and a catalytic material only after the welding, since the support material lowers electric conductivity and hinders the flow of current during welding. When the support material is added to a completed honeycomb, it does not spread evenly but accumulates in the corners formed at the intersections of the foils. This reduces the open cross-sectional area of the opening, and the thick support material tends to chip off during use. Furthermore, a thick layer of support material will draw into itself actual catalyst, which, however will not be able to work effectively.

DE patent 2924592 discloses a method for preparing catalytic honeycombs in which an uncoated corrugated foil band and an uncoated flat foil band are secured to each other by brazing. In the method the honeycomb can be coated only after the foils have been secured to each other.

In terms of the functioning of the catalyst it is of primary importance that the exhaust gas will come into contact with the catalytic surface of the catalytic unit. The reaction velocities are so high that they have less significance. For these reasons, efforts have been made to increase the density of openings or the number of openings per unit area in honeycomb-structured ceramic catalytic unit. Densities of approx. 400 openings per square inch have been achieved in ceramic honeycombs. In order to increase the density of openings, a shift has been made to metal honeycombs. There are also other reasons for this. At present, a commonly used functioning density of openings in metal honeycombs is approx. 500 openings per square inch.

Efforts have been made to improve the efficiency of catalytic metal honeycombs not only by increasing the density of openings but also by causing a "disturbance" of laminar flows in the openings, either by the design of the openings or by making various apertures and corrugations in the honeycomb structures (US patent 4559205 and DE 3738537).

In general, metal honeycombs are completed before the support material layer is applied to the surface of the annealed foil band. Furthermore, often a corrugated foil band and a flat foil band are brazed or in general fixedly secured to each other before the adding of a layer of support material. If the foil bands in a catalytic metal honeycomb are coated with a layer of support material, a large amount of excess support material is left at the joints of the openings formed. When the size of the openings is increased, the catalyst will not sufficiently well, and when the density of the openings increases close to 93 openings/$cm^2$(600 openings/square inch), problems with through-flow and purification efficiency begin.

The accumulation of support material in the corners of the honeycomb passages can be prevented by making a helical honeycomb from a corrugated foil and a flat foil, both coated in advance with a support material, and by supporting the honeycomb with end supports (FI patent 74523) or by a band drawn through the honeycomb (FI patent 78161).

From the US-PS-4 987 112 it is known to chose the cell density, i.e. the number of openings per area unit, within the range of 31 to 124 cells/$cm^2$.

It has now been observed surprisingly that a honeycomb with very small openings, made of corrugated and flat metal foils which have been coated in advance with support material and catalyst layers and have no brazed joints or corresponding fixed joints, is efficient in its purification capacity. The density of openings ranges from greater then 124 to 186 openings per $cm^2$ (800 to 1200 openings per square inch). It was observed surprisingly that also the counterpressure is satisfactory. When the cross-sectional area is sufficient, such a catalytic unit with a high density of openings can be made shorter, and thus both the counterpressure and the installability can be improved without decreasing efficiency. A metallic helical honeycomb such as this, having small openings and a high density of openings and having been coated in its open state, is mechanically very strong with respect to both axial and radial vibrations. The catalytic honeycomb can also be mounted in an inclined or perpendicular position in relation to the direction of the incoming flow.

When the density or number of openings in a catalytic unit is increased, the geometric surface area of the catalytic unit increases, while the dimensions of the openings decrease. In previous investigations it has been noted that the efficiency of a catalytic unit improves as the number of openings increases. It has been deemed that the reason for this is the increased total surface area of the catalytic unit (total sur face area = volume x geometric surface area).

The studies carried out by us have, however, shown surprisingly that the principal reason for the increasing of catalytic efficiency with an increased number of openings was the reduced dimensions of the openings. The diffusion distance from the exhaust gas to the catalytic surface was decreased, and this had a crucial effect on the efficiency of the catalyst. In Example 2, three catalytic units with different densities of openings are compared. All the catalytic units have the same total surface area, the same amount of noble metal, and the same metal composition.

Clearly the lowest emission values were achieved with a high density of openings and the poorest with the lowest density of openings. Since the total surface area of all of the honeycombs was the same, it could be seen that the decrease in the dimensions of the opening has a crucial effect on the conversion efficiency of the catalyst. On the other hand, with respect to the pressure lost, the order was the opposite.

In the second study, the effect of the increasing of the volume of the catalytic unit and the amount of noble metal was compared to the conversion efficiency of the catalyst. It was found surprisingly that a simultaneous increasing of the volume and the noble metal amount was a clearly less effective method of improving the conversion efficiency of the catalyst than was an increasing of the density of openings without increasing the amount of noble metal. Example 3.

On the basis of this it could be concluded that, by using substantially higher densities of openings in catalytic units than at present, substantial savings of expensive noble metals can be achieved.

Example 1.

The following test results illustrate the invention. A is the US efficiency requirement. B and C are results obtained by using conventional catalytic metal honeycombs, and D and E are the results obtained using metal catalytic units according to the invention. The test results were obtained in a so-called CVS test (constant volume sample) according to FTP-75 cycle.

The volume of all of the catalytic units was 1.04 $dm^3$, all of them had the same diameter and length, and all of them contained the same amount of noble metals. All of the catalysts had been aged on an engine bench to a degree corresponding to at least 80,000 km of driving on the road.

| | $HC^g$/km | $CO^g$/km | $NOX^g$/km |
|---|---|---|---|
| A US-83 requirement | 0.25 | 2.11 | 0.62 |
| B 62 openings/$cm^2$ (400 openings/square inch) | 0.32 | 2.46 | 0.59 |
| C 93 openings/$cm^2$ (600 openings/square inch) | 0.27 | 2.10 | 0.42 |
| D 124 62 openings/$cm^2$ (800 openings/square inch) | 0.24 | 1.77 | 0.29 |
| E 186 62 openings/$cm^2$ (1000 openings/square inch) | 0.22 | 1.50 | 0.25 |

Example 2.

In the tests, catalytic units having different densities of openings and different honeycomb lengths were investigated. The cross-sectional area was the same, as was the noble metal content.

| Density of openings openings/$cm^2$ (square inch) | Volume $dm^3$ | HC g/km | CO g/km | NOx g/km |
|---|---|---|---|---|
| 62 (400) | 1.04 | 0.319 | 2.60 | 0.58 |
| 93 (600) | 0.84 | 0.250 | 2.09 | 0.44 |
| 124 (800) | 0.70 | 0.229 | 2.06 | 0.33 |

The geometric surface area was the same in all the three.

Both examples show the advantageousness of a high densities of openings as compared with other catalytic honeycombs, having a lower hole volume.

EP 0 526 611 B1

The catalytic honeycomb according to the invention, having a high density of openings, also has the advantage that it is also suitable as an oxidation catalyst for diesel engines.

One further surprising advantage is that the catalytic unit can be turned to a transverse position. Normally, when a catalytic unit is being mounted, it must be taken into account that

- the space is always limited in the vertical direction in the lower spaces of an automobile
- the space is often limited also in the lateral direction.

Now, if in the system according to the invention the cross-sectional area has been increased, it is possible to make a shortened honeycomb which still works, and it can, in a turned position, be fitted even in congested spaces. In this case, satisfactory results are obtained with a small noble metal amount. The essential idea is that in this embodiment the honeycomb is turned, in relation to the plane of the automobile chassis, horizontally in relation to the exhaust gas flow direction. Example 3 illustrates results obtained using a catalytic unit according to this embodiment.

Example 3.

In this, a 0.84 $dm^3$ metal catalytic unit with 124 openings per $cm^2$ is compared with a 1.64 $dm^3$ ceramic catalytic unit with 62 openings per $cm^2$.

| Catalytic unit | Density of openings openings/ $cm^2$ (square inch) | Volume $dm^3$ | HC g/km | Co g/km | NOx g/km |
|---|---|---|---|---|---|
| Turned metallic | 124 (800) | 0.84 | 0.185 | 1.41 | 0.28 |
| Straight ceramic | 62 (400) | 1.64 | 0.178 | 1.24 | 0.25 |

The catalysts were aged for 50 hours on an engine bench. This so-called rapid aging corresponds to approximately 80,000 km of driving on the road. The results from the catalytic units are highly comparable even if the metal catalytic unit has a noble metal amount half that of the ceramic one.

Mechanical endurance is one of the most critical properties of catalytic units. Hot exhaust gas discharges from the cylinder as a strong pressure blast. The temperature of the exhaust gas may rise above 900 °C, and the pressure may vary between 0.8 and 1.8 bar. The exhaust gas produces a pressure blast in the catalytic unit, not only in the flow direction but also in a direction perpendicular to the flow direction.

The exhaust gas pressure impulse makes the honeycomb vibrate. The vibration produces noise which radiates outwards from the catalytic honeycomb. In extreme situations the foil of the honeycomb may break because of the vibration. An examination of honeycombs with different densities of openings showed surprisingly that the higher the density of openings the more rigid and stronger the honeycomb was.

In the studies performed it was observed that the strength of a honeycomb is inversely proportional to the power of three of the ridge distance in the corrugated foil. In other words, because at high densities of openings the ridge distance is shorter, the honeycomb is significantly stronger. When the density of openings increases from 62 (400) to 124 (800) openings per $cm^2$ (square inch), the rigidity of the honeycomb triples.

When the density of openings in a catalytic unit is increased, the counterpressure in the catalytic unit increases in proportion to the power of two of the (hydraulic) diameter of the opening. The pressure loss is inversely proportional to the cross-sectional area of the catalytic unit and directly proportional to its length. When high densities of openings are taken into use, the pressure loss due to the catalytic unit must be decreased either by shortening the honeycomb or/and by increasing the cross-sectional area.

In the latter case there is the problem that the flow distribution of gas through the honeycomb tends to worsen, since the flow tends, in accordance with the law of continuity, to pass through the middle. The larger the cross-sectional area, the poorer the relative flow distribution.

It was observed surprisingly that by turning the honeycomb according to the invention to a position partly or entirely transverse to the flow direction, the flow distribution could be improved. This solution is advantageous also with respect to the use of space, since in the exhaust gas flow direction under an automobile there is normally a great deal of space available. Instead, in the directions of height and width there is usually a shortage of space.

4

**Claims**

1.  A catalytic unit wound into a honeycomb from corrugated and flat foils which have been coated with support material and with catalytically active material in advance,
    characterized in that
    the number of openings in said honeycomb ranges from greater than 124 to 186 openings per cm$^2$ (800 to 1200 openings per in$^2$).

2.  A catalytic unit according to claim 1, characterized in that the free surface area of an individual opening is less than 0.8 mm$^2$.

3.  A catalytic unit according to claim 1 or 2, characterized in that said foil-type members are not fixedly secured to each other.

**Patentansprüche**

1.  Katalytische Einheit, die zu einem Wabenkörper aus gewellten und flachen Folien gewickelt ist, welche zuvor mit Trägermaterial und mit katalytisch aktivem Material beschichtet worden sind,
    **dadurch gekennzeichnet,**
    daß die Zahl der Öffnungen in dem Wabenkörper im Bereich von mehr als 124 bis 186 Öffnungen pro cm$^2$ (800 bis 1200 Öffnungen pro in$^2$) liegt.

2.  Katalytische Einheit nach Anspruch 1,
    **dadurch gekennzeichnet,**
    daß die freie Oberfläche einer einzelnen Öffnung weniger als 0,8 mm$^2$ beträgt.

3.  Katalytische Einheit nach Anspruch 1 oder 2,
    **dadurch gekennzeichnet,**
    daß die Folienteile nicht fest aneinander gesichert sind.

**Revendications**

1.  Groupe catalytique enroulé en nid d'abeilles à l'aide de feuilles ondulées et planes qui ont été revêtues à l'avance d'une matière de support et d'une substance ayant une action catalytique,
    caractérisé en ce que
    le nombre des ouvertures à l'intérieur dudit nid d'abeilles est compris dans une plage allant de plus de 124 à 186 ouvertures par cm$^2$ (800 à 1200 ouvertures par pouce$^2$).

2.  Groupe catalytique selon la revendication 1, caractérisé en ce que la superficie libre d'une ouverture individuelle est inférieure à 0,8 mm$^2$.

3.  Groupe catalytique selon la revendication 1 ou 2, caractérisé en ce que les éléments de type de feuilles ne sont pas assujettis les uns aux autres.